# EUROPEAN PATENT APPLICATION

(11) **EP 4 071 398 A1**
(43) Date of publication of application: **12.10.2022**
(21) Application number: 20897323.0
(22) Date of filing: 24.11.2020
(51) Int. Cl.: F16N 39/06, F16H 57/04

(54) **TRANSMISSION MECHANISM**

(30) Priority: 06.12.2019 JP 2019221102
(71) Applicant: Sankyo Seisakusho Co., Tokyo 114-8538 (JP)
(72) Inventor: OISHI, Atsushi, Kikugawa-shi, Shizuoka 439-0018 (JP)
(74) Representative: Gevers Patents
(86) International application number: PCT/JP2020/043604
(87) International publication number: WO 2021/111923

(57) **Abstract**

The present invention provides a transmission mechanism with which a deterioration in accuracy can be suppressed and a service life can be increased by suppressing lubricant deterioration. A transmission mechanism 101 is provided with a housing 102, a first rotating member 103 which is accommodated in the housing 102 and which is capable of rotating about a first rotating member axis 107, and a lubricant which is accommodated in the housing 102 to lubricate the first rotating member 103, wherein: the transmission mechanism is additionally provided with a first filter member 104 which is accommodated in the housing 102 to filter out dust contained in the lubricant; the lubricant is agitated by means of the rotation of the first rotating member 103 about the first rotating member axis 107; and the first filter member 104 is provided in the direction in which the lubricant is caused to flow by means of the agitation from the first rotating member 103.

## Description

### TECHNICAL FIELD

The present invention relates to a transmission mechanism capable of suppressing deterioration in accuracy and extending the service life by suppressing deterioration of lubricant.

### BACKGROUND ART

A cam mechanism as an example of a transmission mechanism is a mechanism in which a cam having a cam rib serving as one shaft is engaged with a bearing fixed to a rotating member as the other shaft, whereby power is transmitted while one shaft of the cam and the rotating member is used as an input shaft and the other shaft is used as an output shaft. By adjusting the inter-axis distance between the input shaft and the output shaft, a preload is generated on the contact surface between the bearing and the cam, and backlash between the input and output can be eliminated. Component errors and assembly errors may occur in the manufacturing of a transmission mechanism, and minute contaminants (pollutants) caused by insufficient cleaning, an assembling step, etc. may intervene in the manufacturing process of the transmission mechanism. Further, friction occurs between a bearing and a cam due to the bearing coming into contact with the cam, so that the bearing and the cam are worn to generate dust.

Patent Literature 1 discloses a rotation transmission mechanism including a motor, a gear driven by the motor, a lubricant for cooling the gear, and lubricant storage means for storing the lubricant and immersing the gear in the lubricant. The gear includes a first spur gear, a second spur gear, a driven shaft, a worm gear (or a roller gear cam), a worm wheel (or a turret around which a plurality of bearings engaging with the roller gear cam are arranged radially and at equal intervals), and a rotating shaft. The lubricant is stored in the lubricant storage means so that the first spur gear, the second spur gear, and the worm gear are completely immersed in the lubricant. Heat generated from the motor is transferred to the gear, and the transferred heat is transferred to the lubricant in which the gear is immersed, whereby the gear is cooled. The functions of the lubricant in the transmission mechanism mainly include a lubricating action, a cooling action, a rust preventing action, and an abrasion powder cleaning action. Although the rust preventing action depends on additives contained in the lubricant and the like, the lubricating action, the cooling action and the abrasion powder cleaning action are greatly affected by usage conditions and the environment.

### CITATION LIST

### PATENT LITERATURE

PATENT LITERATURE 1: JP-A-2014-101989

### SUMMARY OF INVENTION

### TECHNICAL PROBLEM

In the rotation transmission mechanism of Patent Literature 1, the lubrication of the gear is performed by lubricant stored in lubricant storage means. However, when a large amount of lubricant is stored in the lubricant storage means, there is a problem that the stirring resistance of the lubricant increases to generates heat. Further, filling of the lubricant in the lubricant storage means causes a problem that the lubricant may leak out of the lubricant storage means. When the rotation transmission mechanism of Patent Literature 1 is used especially under a high-speed and/or high-load condition, contamination of the lubricant with contaminants and/or dust causes ternary abrasive wear, which causes deterioration in accuracy and reduction in service life, and further causes a risk of failure. Therefore, there is a problem that the product appeal is lowered.

Therefore, in order to solve the above problems, an object of the present invention is to provide a transmission mechanism capable of suppressing deterioration in accuracy and extending the service life by suppressing deterioration of lubricant.

### SOLUTION TO PROBLEM

According to an aspect of the present invention, a transmission mechanism including a housing, a first rotating member that is accommodated in the housing and is rotatable about a first rotating member axis, and a lubricant that is accommodated in the housing to lubricate the first rotating member further includes a first filtering member that is accommodated in the housing to filter dust contained in the lubricant, wherein the lubricant is stirred by rotation of the first rotating member about the first rotating member axis, and the first filtering member is provided in a direction in which the lubricant is caused to flow by stirring from the first rotating member.

According to a specific example of the present invention, in the transmission mechanism, the lubricant is caused to convect by heat generated in the first rotating member, and the first filtering member is provided in a direction in which the lubricant is caused to flow by convection from the first rotating member.

According to a specific example of the present invention, in the transmission mechanism, the first filtering member adsorbs dust of which a particle size decreases according to the direction in which the lubricant is caused to flow from the first rotating member.

According to a specific example of the present invention, in the transmission mechanism, the first filtering member includes a porous material.

According to a specific example of the present invention, in the transmission mechanism, the porous material has pores of which sizes decrease according to the direction in which the lubricant is caused to flow from the first rotating member.

According to a specific example of the present invention, in the transmission mechanism, the first filtering member is provided along a direction of rotation of the first rotating member.

According to a specific example of the present invention, in the transmission mechanism, a gap is provided between the first filtering member and the first rotating member.

According to a specific example of the present invention, in the transmission mechanism, the first filtering member is detachable from the housing.

According to a specific example of the present invention, the transmission mechanism further includes a second rotating member that is lubricated by the lubricant and is rotatable about a second rotating member axis, wherein rotation of one of the first rotating member and the second rotating member enables rotation of the other of the first rotating member and the second rotating member by contact between the first rotating member and the second rotating member, and the lubricant is stirred by a portion of the first rotating member that is not in contact with the second rotating member while the first rotating member and the second rotating member are rotating, and the first filtering member is provided in a direction in which the lubricant is caused to flow by stirring from the portion of the first rotating member which is not in contact with the second rotating member.

According to a specific example of the present invention, the transmission mechanism further includes a second filtering member which is accommodated in the housing to filter dust contained in the lubricant, wherein the lubricant is stirred by a portion of the second rotating member that is not in contact with the first rotating member while the first rotating member and the second rotating member are rotating, and the second filtering member is provided in a direction in which the lubricant is caused to flow by stirring from the portion of the second rotating member which is not in contact with the first rotating member.

According to a specific example of the present invention, in the transmission mechanism, the lubricant is caused to convect by heat generated in the second rotating member, and the second filtering member is provided in a direction in which the lubricant is caused to flow by convection from the second rotating member.

According to a specific example of the present invention, in the transmission mechanism, the second rotating member is provided with a screw-shaped groove for contact with the first rotating member, and the second filtering member is provided at an end portion of the screw-shaped groove.

According to a specific example of the present invention, in the transmission mechanism, the first rotating member includes a plurality of bearings for contact with the second rotating member along a direction of rotation thereof, the lubricant is stirred by a bearing that is not in contact with the second rotating member, and the first filtering member is provided in a direction in which the lubricant is caused to flow from the bearing that is not in contact with the second rotating member.

According to a specific example of the present invention, in the transmission mechanism, the first rotating member includes a gear having a plurality of tooth portions for contact with the second rotating member along a direction of rotation thereof, the lubricant is stirred by a tooth portion which is not in contact with the second rotating member, and the first filtering member is provided in a direction in which the lubricant is caused to flow from the tooth portion which is not in contact with the second rotating member.

### ADVANTAGEOUS EFFECTS OF INVENTION

According to the present invention, by providing the filtering member in the direction in which the lubricant is caused to flow, it is possible to enhance a cleaning effect for the lubricant and suppress the deterioration of the lubricant.

Other objects, features and advantages of the present invention will become apparent from the following description of the embodiments of the present invention taken in conjunction with the accompanying drawings.

### BRIEF DESCRIPTION OF DRAWINGS

[FIG. 1] FIG. 1 is a perspective view which partially transparently shows a transmission mechanism as an embodiment of the present invention.
[FIG. 2] FIG. 2 is a perspective view which partially transparently shows a partial cross-section of the transmission mechanism of FIG. 1.
[FIG. 3] FIG. 3 is a perspective view showing a cross-section which is viewed from the top surface of the transmission mechanism of FIG. 1.
[FIG. 4] FIG. 4 is a cross-sectional view taken from the side surface of the transmission mechanism of FIG. 1.
[FIG. 5] FIG. 5 is a perspective view of various shapes of a first filtering member in the transmission mechanism of the present invention.
[FIG. 6] FIG. 6 is a cross-sectional view taken from the top surface of a transmission mechanism as another embodiment of the present invention.
[FIG. 7] FIG. 7 is a cross-sectional view taken from the side surface of the transmission mechanism of FIG. 6.
[FIG. 8] FIG. 8 is a cross-sectional view taken from the top surface of a transmission mechanism as another embodiment of the present invention.
[FIG. 9] FIG. 9 is a cross-sectional view taken from the side surface of the transmission mechanism of FIG. 8.
[FIG. 10] FIG. 10 is a cross-sectional view taken from the side surface of the transmission mechanism of FIG. 8.
[FIG. 11] FIG. 11 is a cross-sectional view taken from the top surface of a transmission mechanism as another embodiment of the present invention.
[FIG. 12] FIG. 12 is a cross-sectional view taken from the side surface of the transmission mechanism of FIG. 11.
[FIG. 13] FIG. 13 is a perspective view which partially transparently shows a transmission mechanism as another embodiment of the present invention.
[FIG. 14] FIG. 14 is a perspective view which partially transparently shows a partial cross-section of the transmission mechanism of FIG. 13.
[FIG. 15] FIG. 15 is a perspective view which partially transparently shows a partial cross-section of the transmission mechanism of FIG. 13.
[FIG. 16] FIG. 16 is a perspective view which partially transparently shows a partial cross-section of the transmission mechanism of FIG. 13.
[FIG. 17] FIG. 17 is a perspective view showing a cross-section taken from the top surface of the transmission mechanism of FIG. 13.
[FIG. 18] FIG. 18 is a cross-sectional view taken from the side surface of the transmission mechanism of FIG. 13.
[FIG. 19] FIG. 19 is a cross-sectional view taken from the side surface of a transmission mechanism as another embodiment of the present invention.
[FIG. 20] FIG. 20 is a cross-sectional view taken from the side surface of a transmission mechanism as another embodiment of the present invention.
[FIG. 21] FIG. 21 is a cross-sectional view taken from the top surface of a transmission mechanism as another embodiment of the present invention.
[FIG. 22] FIG. 22 is a cross-sectional view taken from the side surface of the transmission mechanism of FIG. 21.
[FIG. 23] FIG. 23 is a cross-sectional view taken from the side surface of the transmission mechanism of FIG. 21.
[FIG. 24] FIG. 24 is a cross-sectional view taken from the top surface of a transmission mechanism as another embodiment of the present invention.
[FIG. 25] FIG. 25 is a cross-sectional view taken from the side surface of the transmission mechanism of FIG. 24.

### DESCRIPTION OF EMBODIMENTS

Embodiments according to the present invention will be described with reference to the drawings. However, the present invention is not limited to those embodiments.

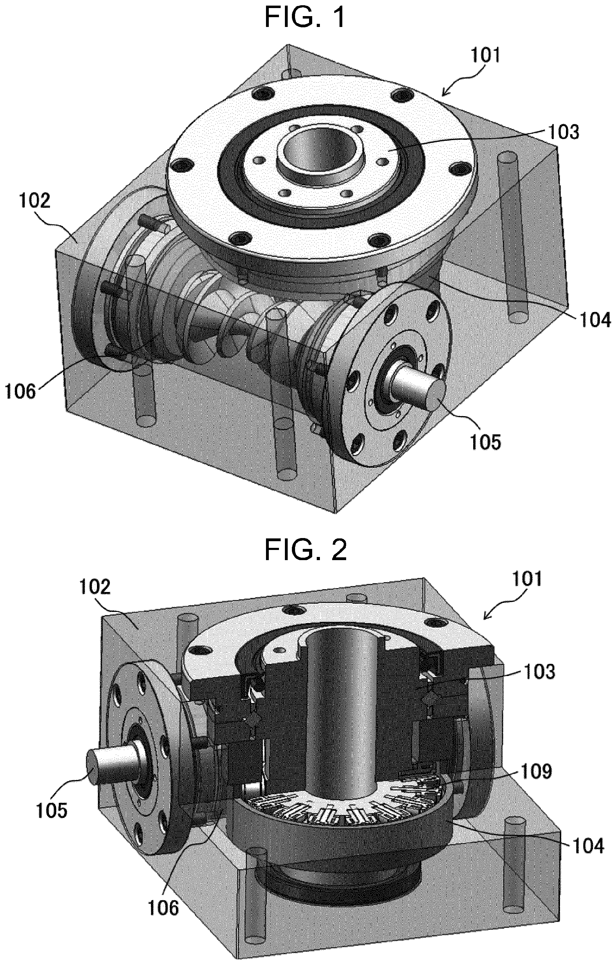

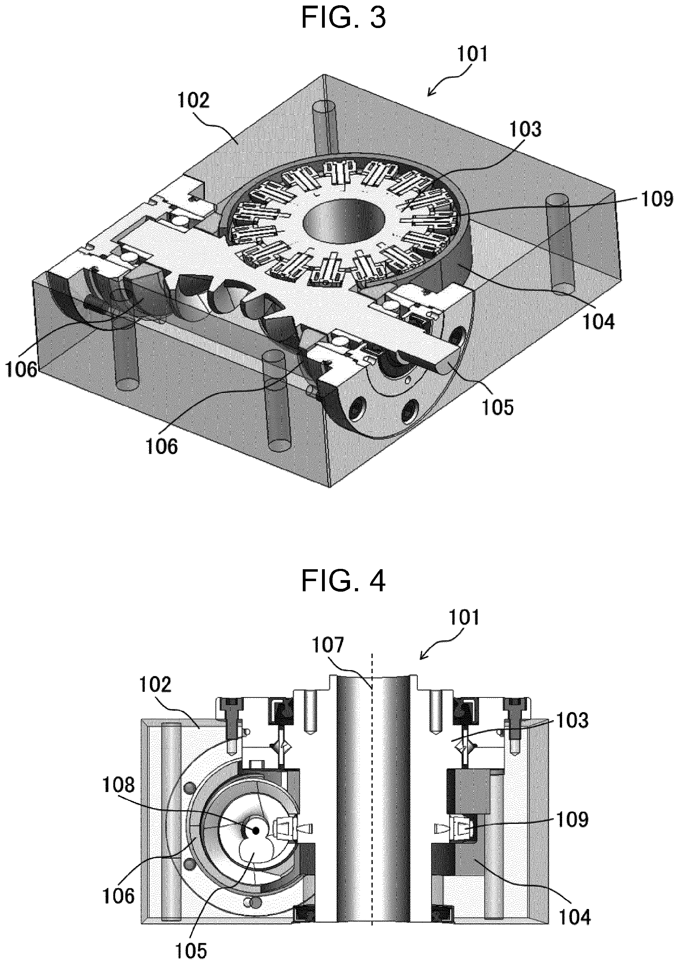

An embodiment of a transmission mechanism 101 will be described with reference to FIGS. 1 to 4. The transmission mechanism 101 includes a housing 102, a first rotating member 103 that is accommodated in the housing 102 and is rotatable about a first rotating member axis 107, and lubricant which is accommodated in the housing 102 to lubricate the first rotating member 103. The transmission mechanism 101 further includes a first filtering member 104 which is accommodated in the housing 102 and filters dust contained in the lubricant. The first filtering member 104 is fixed to the housing 102. The lubricant is stirred by the rotation of the first rotating member 103 about the first rotating member axis 107, and the first filtering member 104 is provided in a direction in which the lubricant is caused to flow by the stirring from the first rotating member 103. For example, when the first rotating member 103 rotates about the first rotating member axis 107, the lubricant is stirred so as to flow radially outward by a centrifugal force from the first rotating member 103. The first filtering member 104 is provided on the outside in the radial direction of the first rotating member 103, which is the direction in which the lubricant is caused to flow by stirring, and dust contained in the lubricant passing through the first filtering member 104 is adsorbed by the first filtering member 104. In this case, the first filtering member 104 may be provided along the direction of rotation of the first rotating member 103. The stirred lubricant is cleaned by the first filtering member 104, so that it is possible to maintain cleanliness of the lubricant and suppress deterioration of the lubricant. Further, the suppression of the deterioration of the lubricant makes it possible to suppress deterioration of the accuracy of the transmission mechanism 101, suppress fretting and/or smearing under high-speed and/or high-load conditions, extend the maintenance cycle of the transmission mechanism 101, and extend the service life of the transmission mechanism 101. The first filtering member 104 can be installed in an existing dead space of the transmission mechanism 101.

The lubricant is caused to convect by heat generated in the first rotating member 103. Examples of a heat transfer style include heat conduction, convective heat transfer, radiation, and the like. Convection means that a difference in density is generated by a temperature difference in a fluid to cause buoyancy, so that a flow is generated. The convective heat transfer means that heat is carried by the convection of a fluid body which is increased in temperature. The rotation of the first rotating member 103 generates heat in the first rotating member 103, and the convention of the lubricant occurs due to the generated heat. The first filtering member 104 may be provided in a direction in which the lubricant is caused to flow by the convection from the first rotating member 103. For example, convection occurs in a direction from the high-temperature first rotating member 103 to the low-temperature housing 102. Therefore, the first filtering member 104 may be provided between the first rotating member 103 and the housing 102. The lubricant is caused to flow to the first filtering member 104 by this convection and passes through the first filtering member 104, and dust contained in the lubricant is adsorbed by the first filtering member 104. In this case, the first filtering member 104 may be provided along the direction of rotation of the first rotating member 103. The convecting lubricant can be cleaned by the first filtering member 104, so that it is possible to maintain cleanliness of the lubricant and suppress deterioration of the lubricant. Further, by suppressing the deterioration of the lubricant, it is possible to suppress the deterioration of the accuracy of the transmission mechanism 101, suppress fretting and/or smearing under high-speed and/or high-load conditions, extend the maintenance cycle of the transmission mechanism 101, and extend the service life of the transmission mechanism 101. Further, the heat generated in the high-temperature first rotating member 103 is carried in a direction to the low-temperature housing 102 via the lubricant by convective heat transfer, and the lubricant is cooled in the vicinity of the housing 102. A gap is provided between the first filtering member 104 and the first rotating member 103, and the cooled lubricant is caused to flow in a direction from the housing 102 to the first rotating member 103 and enters the gap to be capable of cooling the first rotating member 103 and lowering the temperature of the first rotating member 103, and further suppressing the deterioration of the accuracy of the transmission mechanism 101. The lubricant accommodated in the housing 102 may include at least one of a liquid lubricant, a semi-solid lubricant, a solid lubricant, a liquid crystal lubricant, and a gel-like lubricant. For example, the lubricant may be grease, oil, or the like. Although the lubricant to be accommodated in the housing 102 can be selected as needed, it is preferable that it is a lubricant capable of causing stirring and/or convection in the housing 102.

The heat generated in the transmission mechanism 101 causes heat conduction and convection with the lubricant as a medium in the housing 102, and the generated heat is dissipated from the housing 102 to the atmosphere via the lubricant. As convection of the lubricant, forced convective heat transfer by stirring caused by rotation of the first rotating member 103 around the first rotating member axis 107 occurs in addition to natural convective heat transfer in the housing 102. In the forced convection, the medium has a higher heat transfer coefficient as the medium has a lower viscosity. Therefore, a lubricant having a lower viscosity (for example, a fluid lubricant, a liquid lubricant) can be more expected as a lubricant having a cooling action by the forced convection, and is preferable as a medium. However, even such a lubricant may be difficult to dissipate heat from the transmission mechanism 101 because the thermal conductivity thereof is lower than those of steel, nonferrous metal, resin, and the like. Further, since the heat transfer coefficient is affected by the thermal conductivity and surface area of the medium, in order to increase the heat transfer coefficient, and the medium should be made thinner, the surface area of the medium should be larger, and a medium having excellent heat transfer should be selected. Further, it is preferable that the first rotating member 103 is cooled while the first rotating member 103 is efficiently lubricated with a small amount of lubricant. However, when the amount of lubricant is small and contaminants such as dust as described above intervene, the degree of contamination of the lubricant tends to increase. Therefore, it is necessary to take measures against the contaminants, and it is also important to consider not to impair the cooling effect of the forced convection by stirring. Therefore, in consideration of non-impairing of the cooling effect of the forced convection by stirring, a minimum space for cooling the first rotating member 103 may be secured in the housing 102, such a first filtering member 104 having a high thermal conductivity (a material (steel, nonferrous metal, resin, etc.), shape, etc.) as expected to have a cooling action may be adopted, and/or a first filtering member 104 having a cleaning action against contaminants may be adopted. In this way, it is possible to adopt the optimum lubricant and first filtering member 104 by selecting the lubricant to be accommodated in the housing 102 and selecting the material, shape, etc. of the first filtering member 104. Further, by using a small amount of lubricant, maintenance such as refueling and waste oil treatment is economical, and it is expected that the environmental load will be reduced.

As shown in FIGS. 1 to 4, the first rotating member 103 may include bearings 109 as components for transmitting power. The lubricant is stirred by the rotation of the bearings 109 about the first rotating member axis 107, and the first filtering member 104 is provided in a direction in which the lubricant is caused to flow by the stirring from the bearings 109. For example, when the bearings 109 rotate about the first rotating member axis 107, the lubricant is stirred so as to flow outward in the radial direction by centrifugal force. The first filtering member 104 is provided on the outside in the radial direction of the bearings 109 which is the direction in which the lubricant is caused to flow by stirring, and dust contained in the lubricant passing through the first filtering member 104 is adsorbed by the first filtering member 104. Further, the rotation of the bearings 109 causes generation of heat in the bearings 109, and the heat causes occurrence of convection of the lubricant. For example, convection occurs in a direction away from the high-temperature bearings 109. Therefore, the first filtering member 104 may be provided in a direction in which the lubricant is caused to flow by the convection from the bearings 109, for example, above or below the bearings 109, or between the housing 102 and the bearings 109. The lubricant is caused to flow to the first filtering member 104 by this convection and passes therethrough, and the dust contained in the lubricant is adsorbed by the first filtering member 104. In this case, the first filtering member 104 may be provided along the direction of rotation of the first rotating member 103 so as to surround the bearings 109.

The first rotating member 103 may be any member insofar as it can transmit power, and may include, for example a gear. Like the bearings 109, the lubricant is stirred by rotation of a tooth portion about the first rotating member axis 107, and the first filtering member 104 is provided in a direction in which the lubricant is caused to flow by stirring from the tooth portion. Further, the lubricant is caused to convect by heat generated in the tooth portion due to the rotation of the tooth portion, and the first filtering member 104 is provided in the direction in which the lubricant is caused to flow by the convection from the first rotating member 103.

The first filtering member 104 may adsorb dust whose particle size decreases according to the direction in which the lubricant is caused to flow by stirring and/or convection from the first rotating member 103. The lubricant generates stirring and/or convection according to the shape of the first rotating member 103. The first filtering member 104 may be configured to adsorb dust having large particle sizes at a portion close to a portion of the first rotating member 103 that causes stirring and/or convection of the lubricant, and adsorb dust whose particle size is gradually smaller as it is farther away from the portion of the first rotating member 103 which causes stirring and/or convection. For example, when the first rotating member 103 includes bearings 109 or a tooth portion, which causes stirring and/or convection, the first filtering member 104 may be provided above or below the bearings 109 or the tooth portion, or between the housing 102 and the bearings 109 or the tooth portion, and the first filtering member 104 may be configured to adsorb dust having large particle sizes at a portion close to the bearings 109 or the tooth portion and adsorb dust whose particle size is gradually smaller as it is farther away from the bearings 109 or the tooth portion.

The first filtering member 104 may be formed of a porous material. The first filtering member 104 may have a prefiltration function in which pores of the porous material are coarse in size at a portion close to the portion of the first rotating member 103 that causes stirring and/or convection of the lubricant, and the pores of the porous material are gradually finer in size as they are farther from the portion of the rotating member 103 that causes stirring and/or convection of the lubricant.

The first filtering member 104 may be detachable from the housing 102. The first filtering member 104 is clogged by adsorbing dust contained in the lubricant which has been caused to flow by stirring and/or convection from the first rotating member 103. However, it is possible to detach the first filtering member 104 from the housing 102, and cleaning the first filtering member 104 and then accommodating it into the housing 102 again, or replacing the first filtering member 104 with a new first filtering member 104 and accommodating it into the housing 102.

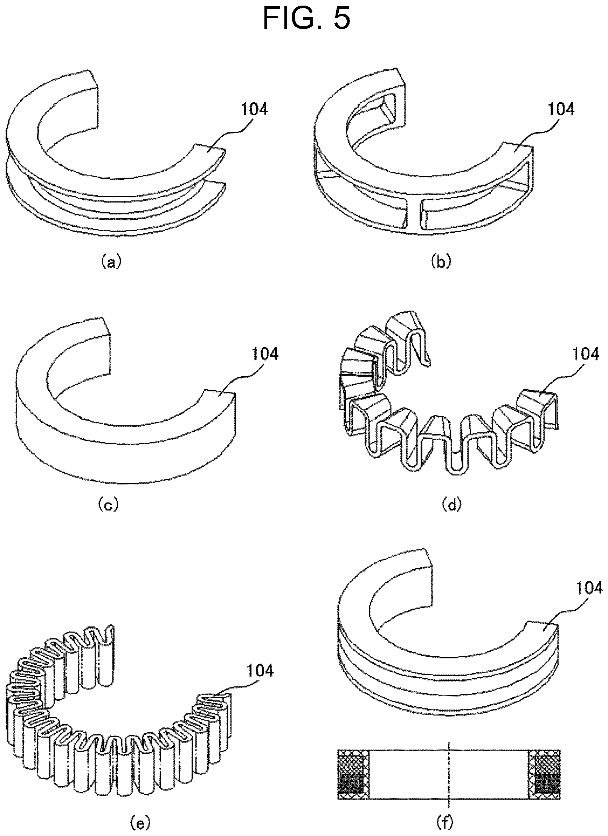

As shown in FIG. 5, the first filtering member 104 may have various shapes according to the direction and/or amount of the lubricant which is caused to flow by stirring and/or convection from the first rotating member 103, the size of a space in which the first filtering member 104 is arranged, the properties of a material to be used for the first filtering member 104, the size and/or amount of dust contained in the lubricant, and the like. For example, the first filtering member 104 may have a substantially U-shaped cross-section as shown in (a), may have a shape in which a reinforcing portion having a substantially U-shaped cross-section as shown in (b) is added according to the size and/or amount of dust to be adsorbed, or may be an integrated type having a substantially rectangular cross-section as shown in (c). Further, when the direction of the lubricant which is caused to flow by the stirring and/or convection from the first rotating member 103 is an axial direction with respect to the first rotating member axis 107, the first filtering member 104 may be an axial flow type as shown in (d), or when the direction of the lubricant which is caused to flow by the stirring and/or convection from the first rotating member 103 is a radial direction with respect to the first rotating member axis 107, the first filtering member 104 may be a depth-pleated type (radial flow type) as shown in (e). Further, when the first filtering member 104 is caused to adsorb dust having large particle sizes at a portion close to a portion of the first rotating member 103 that causes stirring and/or convection of the lubricant and adsorb dust having small particle sizes at a portion far from the portion of the first rotating member 103 that causes stirring and/or convection of the lubricant, the first filtering member 104 may be a multilayered type as shown in (f). The first filtering member 104 may be a member such as a sponge, felt, or the like, a member having magnetism, or a member having high adsorption to dust contained in the lubricant.

As shown in FIGS.1 to 4, the transmission mechanism 101 further includes a second rotating member 105 that is lubricated with lubricant and is rotatable about a second rotating member axis 108. The rotation of one of the first rotating member 103 and the second rotating member 105 enables the rotation of the other of the first rotating members 103 and the second rotating member 105 by the contact between the first rotating member 103 and the second rotating member 105. For example, when the second rotating member 105 rotates as an input shaft, the first rotating member 103 is rotated as an output shaft by the contact between the first rotating member 103 and the second rotating member 105. When the first rotating member 103 rotates as an input shaft, the second rotating member 105 is rotated as an output shaft by the contact between the first rotating member 103 and the second rotating member 105. While the first rotating member 103 and the second rotating member 105 are rotating, the lubricant is stirred by a portion of the first rotating member 103 that is not in contact with the second rotating member 105, and the first filtering member 104 is provided in a direction in which the lubricant is caused to flow by stirring from the portion of the first rotating member 103 which is not in contact with the second rotating member 105. For example, when the first rotating member 103 rotates about the first rotating member axis 107 while coming into contact with the second rotating member 105, the lubricant is stirred so as to flow outward in the radial direction by the centrifugal force from the portion of the first rotating member 103 which is not in contact with the second rotating member 105. The first filtering member 104 is provided on the outside in the radial direction of the portion of the first rotating member 103 in no contact with the second rotating member 105, which is the direction in which the lubricant is caused to flow by stirring, and the dust contained in the lubricant passing through the first filtering member 104 is adsorbed by the first filtering member 104. In this case, the first filtering member 104 may be provided along the portion of the first rotating member 103 which is not in contact with the second rotating member 105. The stirred lubricant is cleaned by the first filtering member 104, whereby the cleanliness of the lubricant can be kept and the deterioration of the lubricant can be suppressed. Further, by suppressing the deterioration of the lubricant, it is possible to suppress the deterioration of the accuracy of the transmission mechanism 101, suppress fretting and/or smearing under high-speed and/or high-load conditions, extend the maintenance cycle of the transmission mechanism 101, and extend the service life of the transmission mechanism 101.

The transmission mechanism 101 may further include a second filtering member 106 that is accommodated in the housing 102 to filter dust contained in the lubricant. The second filtering member 106 is fixed to the housing 102. While the first rotating member 103 and the second rotating member 105 are rotating, the lubricant is stirred by a portion of the second rotating member 105 that is not in contact with the first rotating member 103, and the second filtering member 106 is provided in a direction in which the lubricant is caused to flow by stirring from the portion of the second rotating member 105 that is not in contact with the first rotating member 103. For example, in a case where the second rotating member 105 is provided with a screw-shaped groove for contact with the first rotating member 103, when the second rotating member 105 rotates about the second rotating member axis 108 while coming into contact with the first rotating member 103, the lubricant is stirred to flow along the second rotating member axis 108 by a screw effect of the screw-shaped groove of the second rotating member 105 that is not in contact with the first rotating member 103. The second filtering member 106 is provided on the outside in the axial direction of the second rotating member axis 108 which is the direction in which the lubricant is caused to flow by stirring, and the dust contained in the lubricant passing through the second filtering member 106 is adsorbed by the second filtering member 106. In this case, the second filtering member 106 may be provided at an end portion of the screw-shaped groove. The stirred lubricant is cleaned by the second filtering member 106, whereby the cleanliness of the lubricant can be maintained and the deterioration of the lubricant can be suppressed. Further, by suppressing the deterioration of the lubricant, it is possible to suppress the deterioration of the accuracy of the transmission mechanism 101, suppress fretting and/or smearing under high-speed and/or high-load conditions, and extend the maintenance cycle of the transmission mechanism 101, and extend the service life of the transmission mechanism 101.

The lubricant is caused to convect by the heat generated by the second rotating member 105. The rotation of the second rotating member 105 generates heat in the second rotating member 105, and the heat causes convection of the lubricant. The second filtering member 106 may be provided in a direction in which the lubricant is caused to flow by the convection from the second rotating member. For example, convection occurs from the high-temperature second rotating member 105 to the low-temperature housing 102. Therefore, the second filtering member 106 may be provided between the second rotating member 105 and the housing 102. The lubricant is caused to flow to the second filtering member 106 by this convention and passes therethrough, and the dust contained in the lubricant is adsorbed by the second filtering member 106. In this case, the second filtering member 106 may be provided along the direction of rotation of the second rotating member 105. The convecting lubricant is cleaned by the second filtering member 106, whereby the cleanliness of the lubricant can be maintained and the deterioration of the lubricant can be suppressed. Further, by suppressing the deterioration of the lubricant, it is possible to suppress the deterioration of the accuracy of the transmission mechanism 101, suppress fretting and/or smearing under high-speed and/or high-load conditions, extend the maintenance cycle of the transmission mechanism 101, and extend the service life of the transmission mechanism 101. Further, the heat generated in the high-temperature second rotating member 105 is carried to the low-temperature housing 102 via the lubricant by convection heat transfer, and the lubricant is cooled in the vicinity of the housing 102. A gap is provided between the second filtering member 106 and the second rotating member 105, and the cooled lubricant is caused to flow in a direction from the housing 102 to the second rotating member 105, and enters the gap, so that the cooled lubricant can cool the second rotating member 105, lower the temperature of the second rotating member 105, and further suppress the deterioration of the accuracy of the transmission mechanism 101.

The first rotating member 103 includes a plurality of bearings 109 for contacting the second rotating member 105 along the direction of rotation thereof, and the second rotating member 105 has a shape allowing engagement with the plurality of bearings 109. Examples of such a transmission mechanism 101 includes a hand-drum type cam mechanism. While the first rotating member 103 and the second rotating member 105 are rotating, the lubricant is stirred by bearings 109 which are not in contact with the second rotating member 105, and the first filtering member 104 is provided in a direction in which the lubricant is caused to flow from the bearings 109 which are not in contact with the second rotating member 105. Further, the rotation of the bearings 109 generate heat in the bearings 109, and the generated heat causes convection of the lubricant. Therefore, the first filtering member 104 may be provided in the direction in which the lubricant is caused to flow by the convection from the bearings 109. In this case, the first filtering member 104 may be provided along the direction of rotation of the first rotating member 103 so as to surround the bearings 109 that are not in contact with the second rotating member 105. The first filtering member 104 may be accommodated in the housing 102 before the bearings 109 are attached to the first rotating member 103.

Each bearing 109 may include an inner ring portion, and a substantially cylindrical outer ring portion that is rotatable around the inner ring portion along the side surface of the inner ring portion, and it may be a rolling-contact bearing having rolling elements such as rollers, needles or the like between the inner ring portion and the outer ring portion, or a sliding-contact bearing having no rolling element. Further, each bearing 109 may be a cam follower in which a fixing member for fixing each bearing 109 to the first rotating member 103 is provided inside the inner ring portion, and the fixing member is fitted to a main body portion of the first rotating member 103, that is, a portion of the first rotating member 103 excluding the plurality of bearings 109, whereby each bearing 109 is fixed to the first rotating member 103 so that the outer ring portion thereof is rotatable. Further, each bearing 109 may be a roller follower having no fixing member, and a fixing member as a member separate from the bearing 109 penetrates the inside of the inner ring portion, and is fitted to the main body portion of the first rotating member 103, whereby each bearing 109 is fixed to the first rotating member 103 so that the outer ring portion thereof is rotatable. The second rotating member 105 has a shape allowing engagement the cam follower, the roller follower. Further, each bearing 109 may be a ball, and the ball is engaged with the main body portion of the first rotating member 103, and the second rotating member 105 has a shape allowing engagement with the ball.

The second rotating member 105 may be a cam which has a cam rib and engages with the bearings 109. Any of the first rotating member 103 and the second rotating member 105 may be an input shaft or an output shaft. The shape of the cam may be a shape having a screw-shaped cam rib. For example, the plurality of bearings 109 sequentially come into contact with the cam rib one after another so that when the second rotating member 105 rotates as an input shaft about the second rotating member axis 108, the first rotating member 103 can rotate as an output shaft about the first rotating member axis 107 orthogonal to the second rotating member axis 108. While the first rotating member 103 and the second rotating member 105 are rotating, the lubricant is stirred by the bearings 109 that are not in contact with the cam rib, and the first filtering member 104 is provided in a direction in which the lubricant is caused to flow from the bearings 109 being in no contact with the rotating member 105. Further, the rotation of the bearings 109 generates heat in the bearings 109, and the heat causes convection of the lubricant. Therefore, the first filtering member 104 may be provided in a direction in which the lubricant is caused to flow by the convection from the bearings 109. Further, when the bearings 109 come in rolling contact with the cam rib, it is possible to enhance the transfer efficiency of torque input from the first rotating member 103 or the second rotating member 105 as the input shaft to the second rotating member 105 or the first rotating member 103 as the output shaft, and also extend the service life of the transmission mechanism 101. Further, since the bearing 109 and the cam rib are in line contact with each other, it brings high rigidity against an external force in the direction of rotation of the first rotating member 103. Note that according to the shape of the cam, the plurality of bearings 109 may be radially attached to the outer peripheral surface of the main body portion of the first rotating member 103 having a substantially cylindrical shape, or may be circularly attached to the end face of the main body portion of the first rotating member 103 having a substantially cylindrical shape.

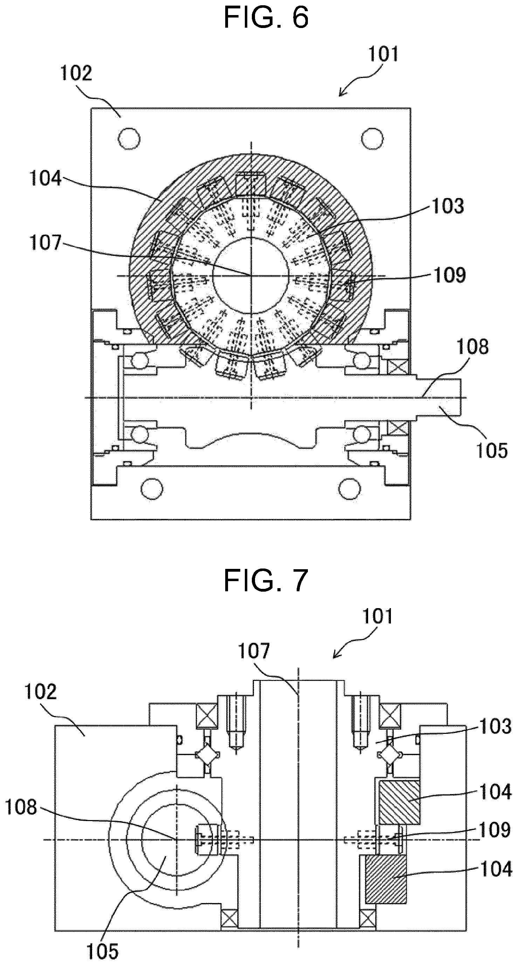

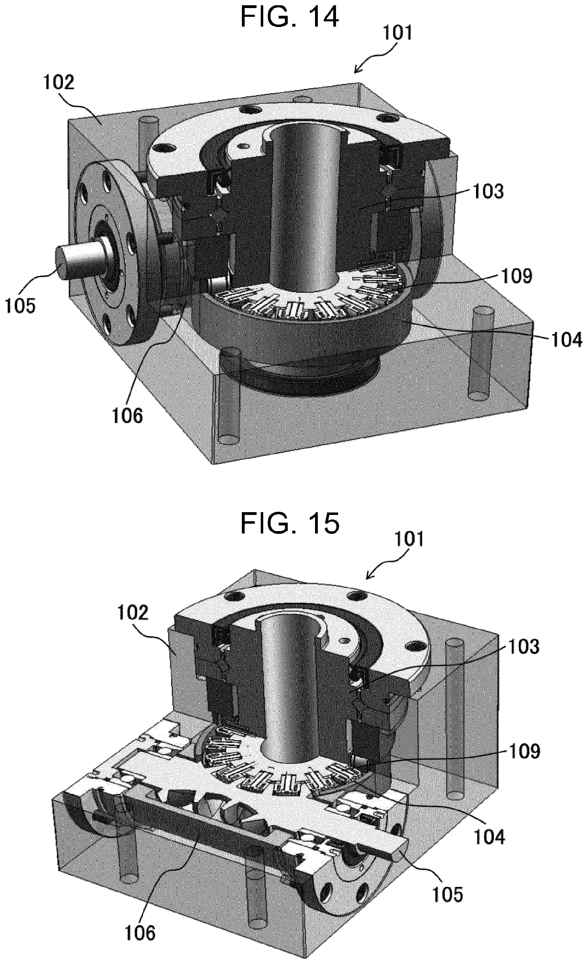

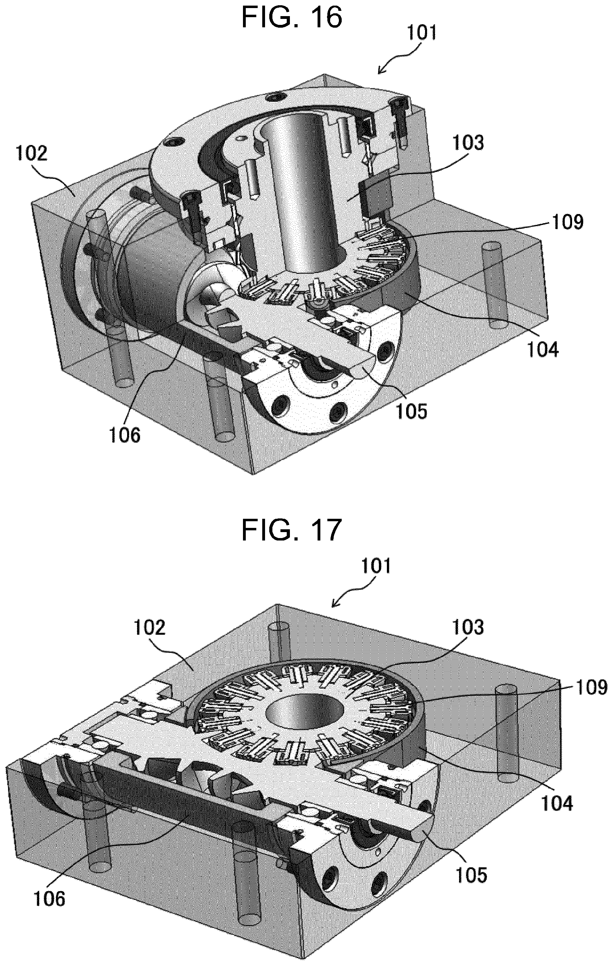

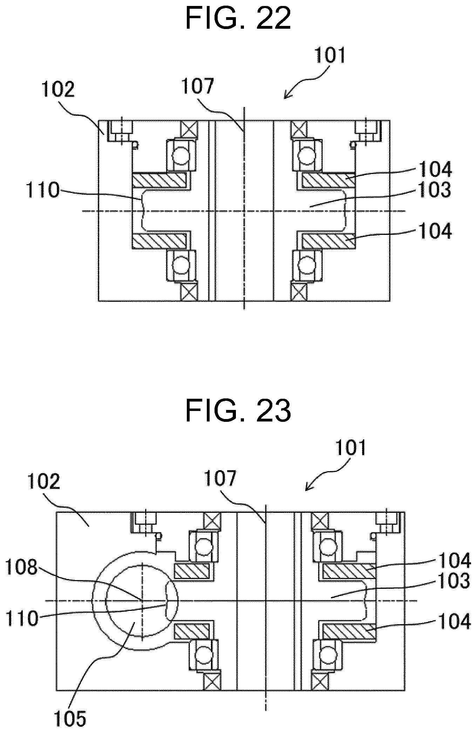

Another embodiment of the transmission mechanism 101 will be described with reference to FIGS. 6 to 25. As shown in FIGS. 6 and 7, in the transmission mechanism 101, the first filtering member 104 may be provided below or above the bearings 109 in the axial direction of the first rotating member axis 107. The lower and upper first filtering members 104 may be of the same type or different types depending on the size of the dust contained in the lubricant which is caused to flow by stirring and/or convection from the first rotating member 103.

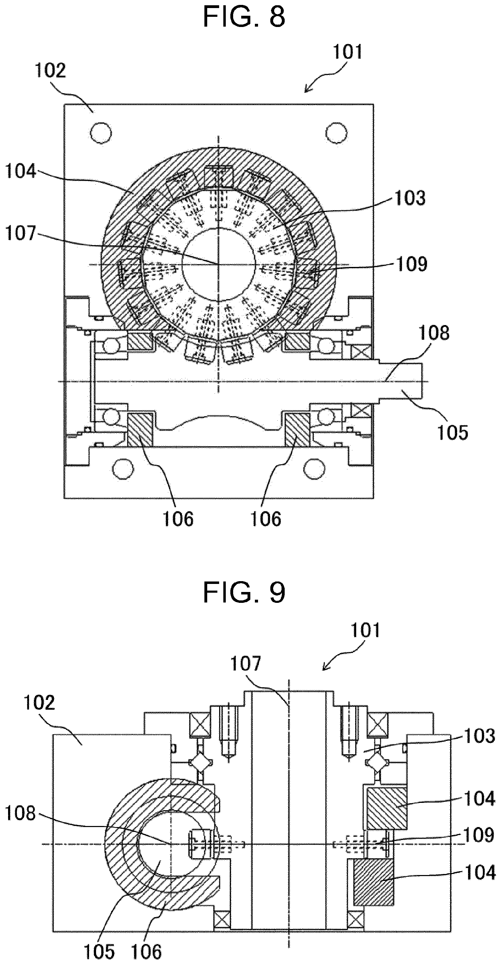

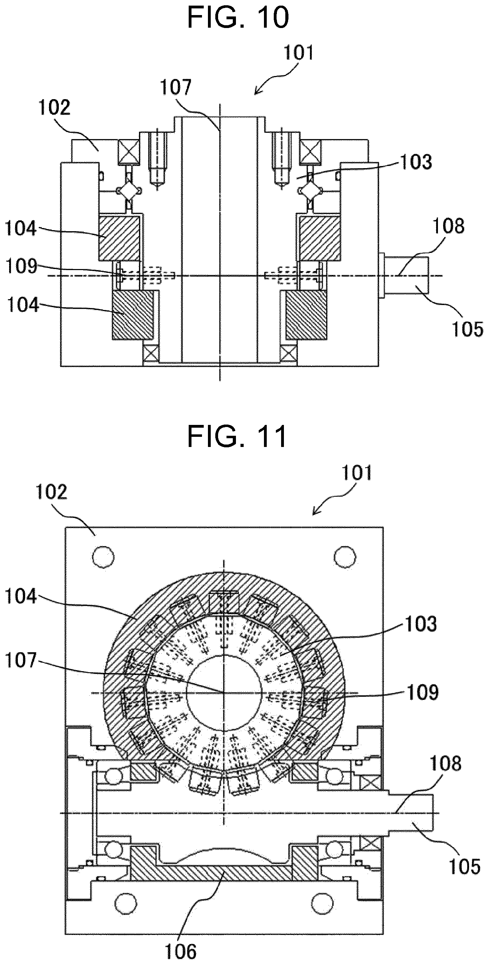

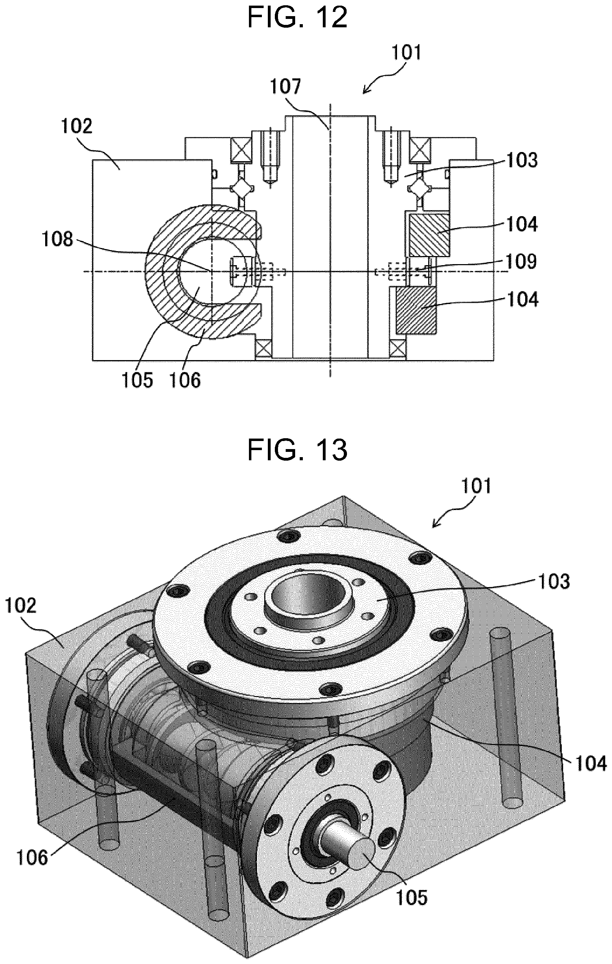

As shown in FIGS. 8 to 10, in the transmission mechanism 101, the second filtering member 106 may be provided on the outside in the axial direction of the second rotating member axis 108 in addition to the first filtering member 104. When the second rotating member 105 is provided with a screw-shaped groove, upon rotation of the second rotating member 105 about the second rotating member axis 108, the lubricant is stirred to flow along the second rotating member axis 108 by the screw effect of the screw-shaped groove of the second rotating member 105 which is not in contact with the first rotating member 103. The second filtering member 106 is provided at the end portion of the screw-shaped groove, and dust contained in the lubricant is adsorbed by the second filtering member 106. The second filtering member 106 may be provided at both the end portions of the screw-shaped groove so that the second rotating member 105 is allowed to rotate in any direction about the second rotating member axis 108 and thus the lubricant is allowed to flow in any direction along the second rotating member axis 108. As shown in FIGS. 11 and 12, in the transmission mechanism 101, the second filtering member 106 may be provided along the rotation direction of the second rotating member axis 108. When the second rotating member 105 rotates about the second rotating member axis 108, the lubricant is stirred to flow radially outward by the centrifugal force from the second rotating member 105. The second filtering member 106 is provided on the outside in the radial direction of the second rotating member 105, which is the direction in which the lubricant is caused to flow by stirring, and the dust contained in the lubricant passing through the second filtering member 106 is adsorbed by the second filtering member 106. As shown in FIGS. 13-18, the first filtering member 104 may be provided above and below the bearings 109 and between the housing 102 and the bearings 109 along the direction of rotation of the first rotating member 103 so as to surround the bearings 109 in the direction in which the lubricant is caused to flow by stirring and/or convection from the bearings 109.

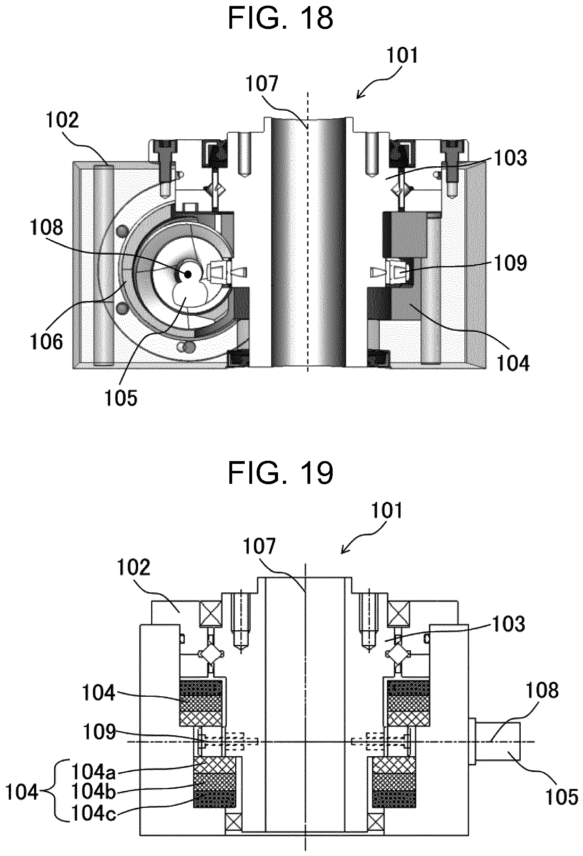

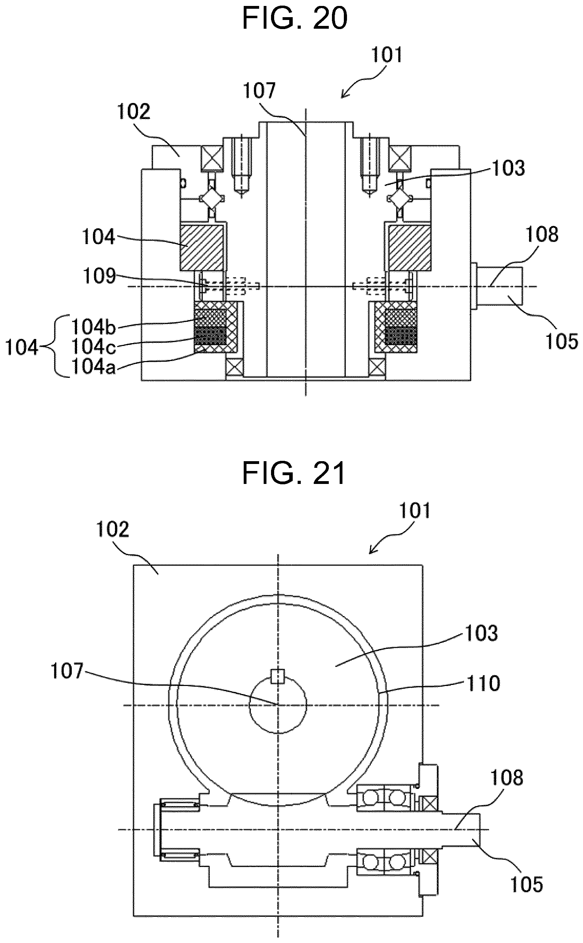

As shown in FIG. 19, in the transmission mechanism 101, the first filtering members 104 are provided below and above the bearings 109 in the axial direction of the first rotating member axis 107 respectively, and both of the lower and upper filtering members 104 may be multilayered types each including a first layer 104a for adsorbing dust having large particle sizes at a portion close to the bearings 109, a second layer 104b for adsorbing dust having intermediate particle sizes at an intermediate portion from the bearings 109, and a third layer 104c for adsorbing dust having small particle sizes at a portion far from the bearings 109. Further, as shown in FIG. 20, in the transmission mechanism 101, only one (for example, the lower) first filtering member 104 may be a multilayered type. All of the first layer 104a, the second layer 104b, and the third layer 104c are not necessarily layers for adsorbing dust. For example, the first layer 104a, the second layer 104b and the third layer 104c may be layers having different properties like the first layer 104a is a layer for adsorbing dust having large particle sizes, the second layer 104b is a layer for adsorbing dust having small particle sizes, and the third layer 104c is a layer for transferring heat, or the like, and the properties of the layers may be selected as needed.

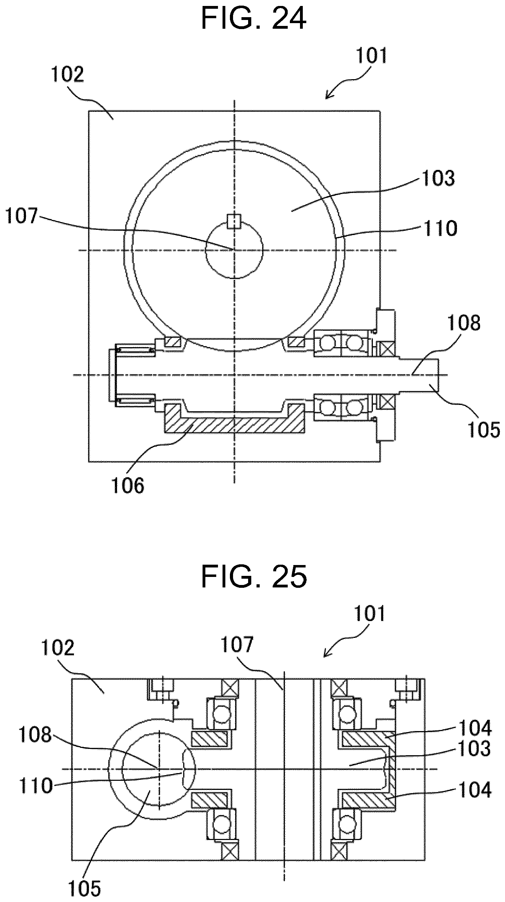

As shown in FIGS. 21 to 23, in the transmission mechanism 101, the first rotating member 103 may include a gear having a plurality of tooth portions 110 for contact with the second rotating member 105 along the rotation direction thereof, and the second rotating member 105 may have a shape allowing engagement with the tooth portion 110. Examples of the transmission mechanism 101 described above include a worm gear mechanism. While the first rotating member 103 and the second rotating member 105 are rotating, the lubricant is stirred by the tooth portion 110 that is not in contact with the second rotating member 105, and the first filtering member 104 is provided in a direction in which the lubricant is caused to flow from the tooth portion 110 that is not in contact with the second rotating member 105. Further, heat is generated in the tooth portion 110 due to the rotation of the tooth portion 110, and the generated heat causes convection of the lubricant. Therefore, the first filtering member 104 may be provided in the direction in which the lubricant is caused to flow by the convection from the tooth portion 110. As shown in FIG. 24, in the transmission mechanism 101, the second filtering member 106 may be provided on the outside in the axial direction of the second rotating member axis 108, or may be provided along the direction of rotational of the second rotating member axis 108. While the first rotating member 103 and the second rotating member 105 are rotating, the lubricant is stirred by the portion of the second rotating member 105 that is not in contact with the rotating member 103, and the second filtering member 106 is provided in the direction in which the lubricant is caused to flow from the portion of the second rotating member 105 that is not in contact with the first rotating member 103. Further, heat is generated in the second rotating member 105 due to the rotation of the second rotating member 105, and the generated heat causes convection of the lubricant. Therefore, the second filtering member 106 may be provided in the direction in which the lubricant is caused to flow by the convection from the second rotating member 105. As shown in FIG. 25, the first filtering member 104 may be provided along the direction of rotation of the first rotating member 103 above and below the tooth portion 110 and between the housing 102 and the tooth portion 110 along the direction of rotation of the first rotating member 103 so as to surround the tooth portion 110 being in no contact with the second rotating member 105 in the direction in which the lubricant is caused to flow by the stirring and/or the convention from the tooth portion 110.

The first filtering member 104 and/or the second filtering member 106 may be any member as long as it can adsorb dust contained in the lubricant caused to flowed by stirring and/or convection, and the transmission mechanism 101 including the filtering member 104 and/or the second filtering member 106 accommodated in the housing 102 may be a cam mechanism which includes, as the second rotating member 105, a cam having each of various screw-shaped cam ribs such as a hand-drum type cam (roller gear cam, concave globoidal cam), a tube-shaped cam (cylindrical cam, barrel cam), and a drum type cam (convex globoidal cam). Further, the transmission mechanism 101 may be a ball reducer, a worm reducer, a planetary gear reducer, a wave gear reducer, a traction drive reducer, or the like.

Further, the transmission mechanism 101 may be a circumscribed type having a positional relationship in which the first rotating member 103 and the second rotating member 105 come into contact with each other within the width of a line connecting the first rotating member axis 107 and the second rotating member axis 108, or an inscribed type having a positional relationship in which the first rotating member 103 and the second rotating member 105 come into contact with each other out of the width of the line connecting the first rotating member axis 107 and the second rotating member axis 108. Examples of the inscribed type include an inscribed parallel cam mechanism, an inscribed trochoid gear mechanism, and the like.

It should be further understood by persons skilled in the art that although the foregoing description has been made on embodiments of the present invention, the present invention is not limited thereto and various changes and modifications may be made without departing from the principle of the present invention and the scope of the appended claims.

### REFERENCE SIGNS LIST

- 101: transmission mechanism
- 102: housing
- 103: first rotating member
- 104: first filtering member
- 104a: first layer
- 104b: second layer
- 104c: third layer
- 105: second rotating member
- 106: second filtering member
- 107: first rotating member axis
- 108: second rotating member axis
- 109: bearing
- 110: tooth portion

## Claims

1. A transmission mechanism comprising a housing, a first rotating member that is accommodated in the housing and is rotatable about a first rotating member axis, and a lubricant that is accommodated in the housing to lubricate the first rotating member, wherein
the transmission mechanism further comprises a first filtering member that is accommodated in the housing to filter dust contained in the lubricant, wherein
the lubricant is stirred by rotation of the first rotating member about the first rotating member axis, and the first filtering member is provided in a direction in which the lubricant is caused to flow by stirring from the first rotating member.

2. The transmission mechanism according to claim 1, wherein the lubricant is caused to convect by heat generated in the first rotating member, and the first filtering member is provided in a direction in which the lubricant is caused to flow by convection from the first rotating member.

3. The transmission mechanism according to claim 1 or 2, wherein the first filtering member adsorbs dust of which a particle size decreases according to the direction in which the lubricant is caused to flow from the first rotating member.

4. The transmission mechanism according to any one of claims 1 to 3, wherein the first filtering member comprises a porous material.

5. The transmission mechanism according to claim 4, wherein the porous material has pores of which sizes decrease according to the direction in which the lubricant is caused to flow from the first rotating member.

6. The transmission mechanism according to any one of claims 1 to 5, wherein the first filtering member is provided along a direction of rotation of the first rotating member.

7. The transmission mechanism according to any one of claims 1 to 6, wherein a gap is provided between the first filtering member and the first rotating member.

8. The transmission mechanism according to any one of claims 1 to 7, wherein the first filtering member is detachable from the housing.

9. The transmission mechanism according to any one of claims 1 to 8, further comprising a second rotating member that is lubricated by the lubricant and is rotatable about a second rotating member axis, wherein rotation of one of the first rotating member and the second rotating member enables rotation of the other of the first rotating member and the second rotating member by contact between the first rotating member and the second rotating member, and
the lubricant is stirred by a portion of the first rotating member that is not in contact with the second rotating member while the first rotating member and the second rotating member are rotating, and the first filtering member is provided in a direction in which the lubricant is caused to flow by stirring from the portion of the first rotating member which is not in contact with the second rotating member.

10. The transmission mechanism according to claim 9, further comprising a second filtering member which is accommodated in the housing to filter dust contained in the lubricant, wherein the lubricant is stirred by a portion of the second rotating member that is not in contact with the first rotating member while the first rotating member and the second rotating member are rotating, and the second filtering member is provided in a direction in which the lubricant is caused to flow by stirring from the portion of the second rotating member which is not in contact with the first rotating member.

11. The transmission mechanism according to claim 10, wherein the lubricant is caused to convect by heat generated in the second rotating member, and the second filtering member is provided in a direction in which the lubricant is caused to flow by convection from the second rotating member.

12. The transmission mechanism according to claim 10 or 11, wherein the second rotating member is provided with a screw-shaped groove for contact with the first rotating member, and the second filtering member is provided at an end portion of the screw-shaped groove.

13. The transmission mechanism according to any one of claims 9 to 12, wherein the first rotating member comprises a plurality of bearings for contact with the second rotating member along a direction of rotation thereof, the lubricant is stirred by a bearing that is not in contact with the second rotating member, and the first filtering member is provided in a direction in which the lubricant is caused to flow from the bearing that is not in contact with the second rotating member.

14. The transmission mechanism according to any one of claims 9 to 12, wherein the first rotating member comprises a gear having a plurality of tooth portions for contact with the second rotating member along a direction of rotation thereof, the lubricant is stirred by a tooth portion which is not in contact with the second rotating member, and the first filtering member is provided in a direction in which the lubricant is caused to flow from the tooth portion which is not in contact with the second rotating member.
